# EUROPEAN PATENT SPECIFICATION

(11) **EP 2 980 170 B1**
(45) Date of publication and mention of the grant of the patent: **05.05.2021**
(21) Application number: 14775746.2
(22) Date of filing: 04.02.2014
(51) Int. Cl.: C09D 11/00, B41J 2/01, B41M 5/00, B41M 5/50, B41M 5/52, C09D 11/322, C09D 11/38, C09D 11/106, C09D 11/107, B41J 2/02

(54) **INK FOR INKJET PRINTER AND PRINTED MATERIAL**
TINTE FÜR EINEN TINTENSTRAHLDRUCKER UND GEDRUCKTES MATERIAL
ENCRE POUR UNE IMPRIMANTE PAR JET D'ENCRE ET MATIÈRE IMPRIMÉE

(30) Priority: 28.03.2013 JP 2013067831
(43) Date of publication of application: 03.02.2016
(73) Proprietor: Hitachi Industrial Equipment Systems Co., Ltd., Chiyoda-ku Tokyo 101-0022 (JP)
(72) Inventor: SASAKI Hiroshi, Tokyo 100-8280 (JP); OGINO Masahiko, Tokyo 100-8280 (JP); OTOWA Takuya, Tokyo 100-8280 (JP); MAEJIMA Tomoko, Tokyo 101-0022 (JP); NAGAI Keisuke, Tokyo 101-0022 (JP)
(74) Representative: Mewburn Ellis LLP
(86) International application number: PCT/JP2014/052505
(87) International publication number: WO 2014/156308

(56) References cited:
- EP-A1- 1 923 435
- JP-A- H04 218 550
- JP-A- 2001 040 255
- JP-A- 2003 207 078
- JP-A- 2008 297 446
- JP-A- 2013 023 636
- JP-A- 2013 049 786
- US-A1- 2012 033 011

## Description

### Technical Field:

The present invention relates to an ink for an inkjet printer and a material printed with the ink.

### Background Art:

An electric cable has a structure in which a copper wire etc. is sheathed with a resin. And as the resin, a polyvinyl chloride which is less costly and non-flammable is typically used. However, because the polyvinyl chloride as such is a rigid resin, a plasticizer is added to it when it is used for the electric cable that requires flexibility. As the plasticizer, typically, di-2-ethyl hexyl phthalate (DEHP) which is less costly is added in about 30 to 100 parts by mass to 100 parts by mass of polyvinyl chloride. Additionally, dibutyl phthalate and di-2-ethyl hexyl adipate etc. among others are used.

On the electric cable, a manufacturing number or the like is printed with an ink. After it is printed, as the electric cable is stored in indoors or outdoors, the added plasticizer seeps out on a surface of the cable. The plasticizer typically has an ester structure. On the other hand, for an ink solvent, methyl ethyl ketone (MEK) which hastens drying after printing is often used and most of resins that are soluble in MEK are soluble in phthalate or adipate. Consequently, a resin in printed dots dissolves with the plasticizer and the dots themselves dissolve. When the dots dissolve, marking becomes blurred and may be lost completely in some situations. Thus, stable prints cannot be kept over a prolonged period of time.

Plasticizers are added in large quantity to rubber products such as tires and most of them have a phthalate structure such as DEHP; thus, the same problem arises as for electric cables.

In Patent Literature 1, with the aim of providing an ultraviolet curable white ink composition for an inkjet recording having a good discharge stability and good visibility of prints on a black or dark base material and with the keynote of stably dispersing titanium oxide in a light-polymerized compound, an ultraviolet curable white ink composition for an inkjet recording is disclosed that is composed of at least titanium oxide, a polymer dispersant having an acidic polar group, a light-polymerized compound, and a light-polymerized initiator, characterized in that the titanium oxide is surface-treated by silica and alumina and the mass of alumina used for the surface treatment is greater than the mass of silica used for the surface treatment. In this literature, a result of evaluating a state of curing of an ink coating by carrying out a methanol rubbing after irradiating a print applied to a surface of a polyethylene terephthalate film (PET film) with an ultraviolet ray is also described.

### Prior Art Documents:

### Patent Literature:

Patent Literature 1: Japanese Unexamined Patent Application Publication No. 2004-59857

US 2012/033011 describes an inkjet ink and inkjet recording method.

### Summary of Invention:

### Technical Problem:

In the case of the ink described in Patent Literature 1, the printed ink must be irradiated with an ultraviolet ray to solidify it.

An object of the present invention is to keep an ink print applied to a material including a large quantity of a plasticizer stable over a prolonged period of time without irradiating the ink with an ultraviolet ray for curing.

### Solution to Problem:

The present invention resides in an ink as set out in claim 1.

The present invention also resides in a printed material as set out in claim 7.

### Advantageous Effects of Invention:

According to the present invention, it is possible to keep an ink print applied to a material including a large quantity of plasticizer stable over a prolonged period of time without subjecting the ink print to ultraviolet irradiation or other special processing.

### Brief Description of Drawings:

Fig. 1 is a graph showing a relation between an acid value of a resin and a dissolution rate at which the resin dissolves in DEHP.
Fig. 2 is an enlarged schematic view depicting an example of an ink dot surface structure.
Fig. 3 is an enlarged schematic view depicting another example of an ink dot surface structure.
Fig. 4 is a schematic view depicting a printing process of an inkjet printer.

### Description of Embodiments:

Embodiments of the present invention will be described below with the aid of the drawings or the like.

### 1. Constituent substances of ink

An ink includes a pigment, a resin, a solvent, and diverse additives. These substances are stirred to merge together by an overhead stirrer or the like and an ink is prepared. In a case where a material that is to be printed on includes a metal such as an iron or a stainless steel, if ions of chlorine, bromine, iodine, etc. are included in the ink, the ink tends to cause corrosion of the material. Thus, an ink composition not including these ions is provided in the present invention.

### (1) Pigment

Although color does not matter, a white ink is often used for electric cables or the like. And in this case, titanium oxide (with specific gravity of 4.1) or a zirconium dioxide (with specific gravity of 6.1) may be used as a pigment. Titanium oxide with less specific gravity is preferable, since it does not settle down readily even when it is left for a long period of time. It is insoluble in MEK which is an ink solvent and a phthalate and a sebacate which are plasticizers.

An average particle size of titanium oxide falls in a range of about 100 to 1000 nm. Particles of titanium oxide which are smaller than this range are liable to cohere and those which are larger than this range are liable to settle down.

In some cases, a dispersant may be added to disperse the pigment in the solvent. In such cases, a surfactant is effective. Because the pigment surface is more hydrophilic than the solvent, a micellar structure of the surfactant in which hydrophilic groups face toward the pigment particles and hydrophobic groups face toward the solvent is considered to disperse the pigment. As the dispersant, a non-ionic surfactant is preferable in consideration of its easiness to dissolve in the solvent such as MEK. An anionic or cationic surfactant has a structure such as ammonium salt or phosphate architecture in which several alkyl chains are bonded to nitrogen or phosphorus. Such surfactant with short alkyl chains is liable to be less soluble in the solvent such as MEK. Thus, in the case of an anionic or cationic surfactant, it is preferable that an alkyl chain has a total of 12 or more carbon atoms to ensure solubility in the solvent.

### (2) Resin

As a resin of the present invention, a resin including hydroxyl groups which are hydrophilic substituent groups is used. This is for making the resin insoluble or less soluble in a phthalate or a sebacate which is a plasticizer. A resin having such substituent groups becomes soluble or swellable in a hydrophilic solvent such as water and alcohol. Inversely, the resin is liable to be less soluble or less swellable in a hydrophobic plasticizer such as the phthalate and the sebacate. As the proportion of the substituent groups is more, the resin will become less soluble.

Also described herein, but not part of the invention, are resins including carboxyl groups. As a resin including carboxyl groups, particularly, a resin could be selected from, inter alia, those having structures that are expressed by the following chemical formulas (1) to (6) .

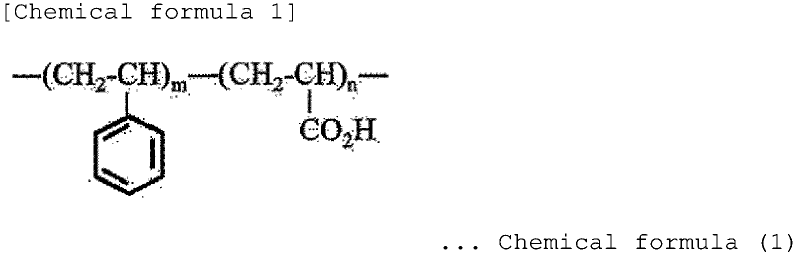

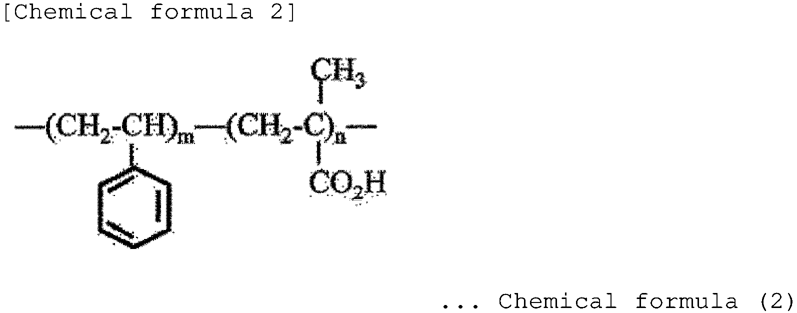

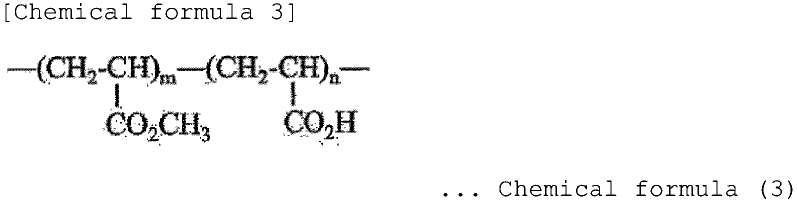

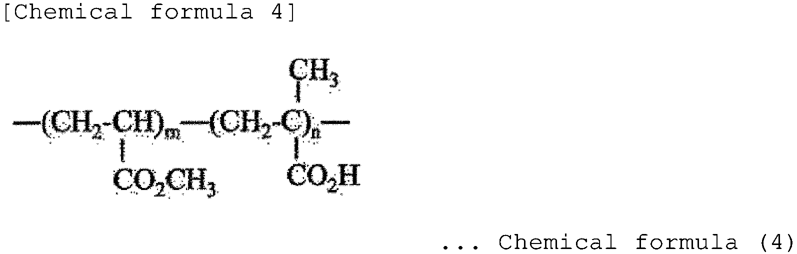

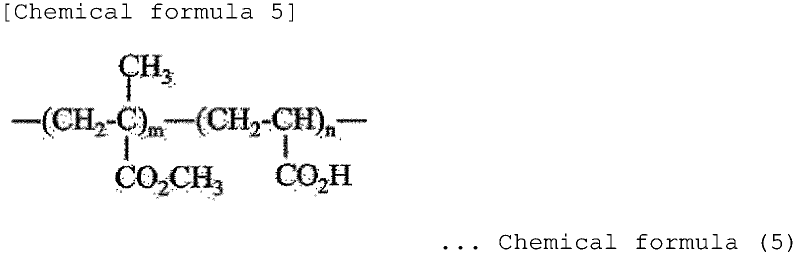

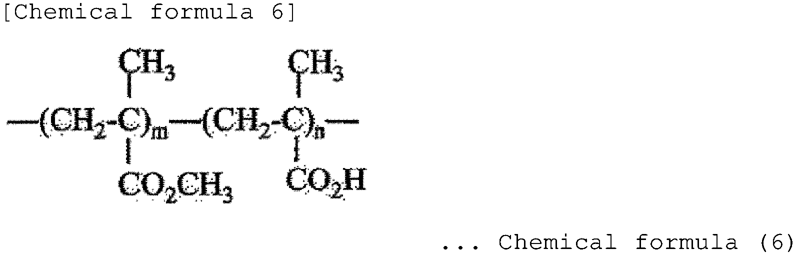

The compound which is expressed by the above chemical formula (1) is a copolymer of a styrene and an acrylic acid. The compound which is expressed by the above chemical formula (2) is a copolymer of a styrene and a methacrylic acid. The compound which is expressed by the above chemical formula (3) is a copolymer of a methyl acrylate and an acrylic acid. The compound which is expressed by the above chemical formula (4) is a copolymer of a methyl acrylate and a methacrylic acid. The compound which is expressed by the above chemical formula (5) is a copolymer of a methyl methacrylate and an acrylic acid. The compound which is expressed by the above chemical formula (6) is a copolymer of a methyl methacrylate and a methacrylic acid.

An average molecular weight of an ink for an inkjet printer of an electrostatic charging control type generally falls in a range of about 4000 to 40000. If the average molecular weight of the ink is more than this range, the ink has increased viscosity and there is a possibility that the ink is not discharged smoothly. If the average molecular weight of the ink is less than the range, dots printed with the ink may become brittle and may be liable to fall off. Such ink is unsuitable. In the above chemical formulas (1) to (6) which represent resins which may be used in the ink, the molecular weights of the structures of their duplicating units fall in a range of 72 to 104. Because the average molecular weight falls in the range of about 4000 to 40000, the sum of m and n which are expressed in the structures usually falls in a range of about 40 to 500.

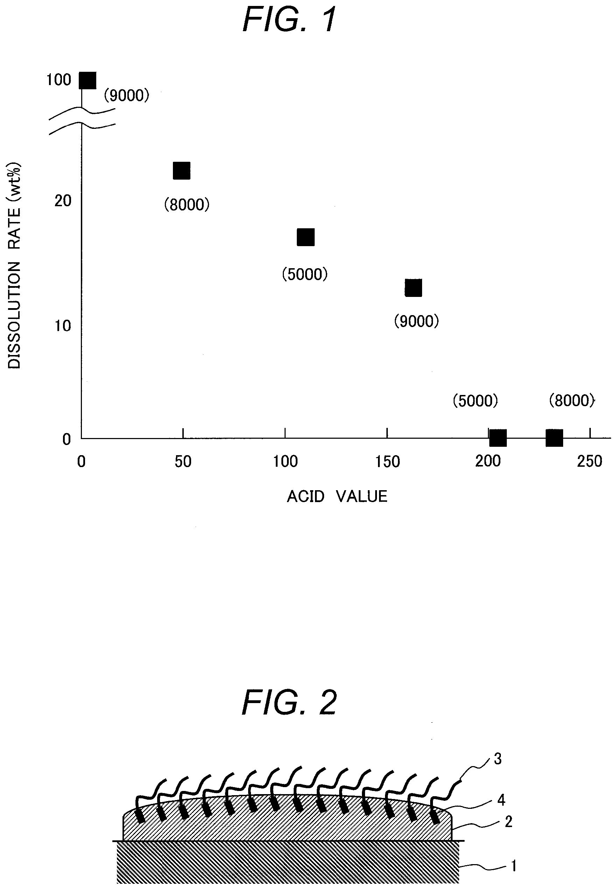

Fig. 1 represents a relation between an acid value of each resin and a dissolution rate at which each resin dissolves in DEHP.

Here, the acid value refers to an mg-number of potassium hydrate that is required to change acidic groups (such as carboxyl groups or sulphonate groups) present in 1 gram of a resin sample to a potassium salt structure.

After putting 1 gram of a resin and 9 grams of DEHP in a sample bottle made of a glass and vibrating the bottle for one hour by an ultrasonic bath, a measurement was taken of a proportion of the resin dissolved in DEHP by a nuclear magnetic resonance method. Values shown in parentheses are the weight-average molecular weights of the tested resins. No effect of the weight-average molecular weights on resin dissolubility in DEHP was found.

When the proportion of carboxyl groups in each of these resins was represented by an acid value, it was found that resins having an acid value of 200 or more substantially did not dissolve in DEHP. A resin having an acid value of 0 completely dissolved in DEHP. Hence, as a resin that could be selected, a resin whose acid value is as high as possible is preferable and a resin having an acid value of 200 or more is more preferable. Resins including carboxyl groups are not part of the present invention.

As a resin including hydroxyl groups, particularly, a resin should be selected from, inter alia, those having structures that are expressed by the following chemical formulas (7) and (8).

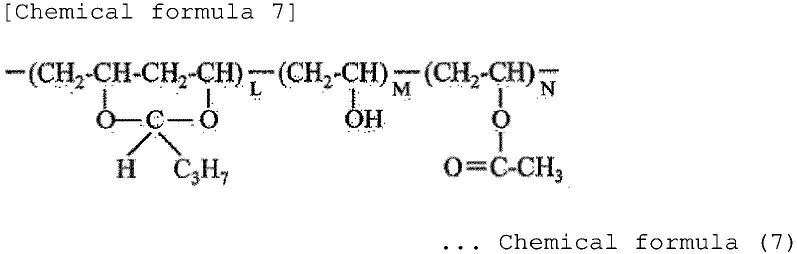

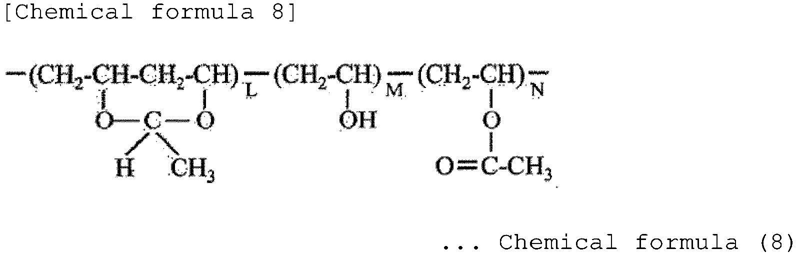

The compound which is expressed by the above chemical formula (7) is a polyvinyl butyral resin. The compound which is expressed by the above chemical formula (8) is a polyvinyl acetal resin. A raw material of both of these resins is polyvinyl acetate. This is hydrolyzed to synthesize polyvinyl alcohol. In this reaction, hydrolysis is not completed 100% and there remain traces (about 1 to 5%) of a vinyl acetate group (-[CH₂CH(OCOCH₃)]_{N}-).

By making butylaldehyde act on the thus synthesized polyvinyl alcohol, the polyvinyl butyral resin can be synthesized. By making acetaldehyde which replaces butylaldehyde act on the polyvinyl alcohol, the polyvinyl acetal resin can be synthesized.

For the compounds expressed by the above chemical formulas (7) and (8), the proportions of duplicating units L and M can be controlled by the proportion of butylaldehyde and acetaldehyde which are made to act.

In the above chemical formulas (7) and (8), the percentages of L, M, and N are approximately 40-80 : 15-55 : 1-5.

When dissolubility of the polyvinyl butyral resin and polyvinyl acetal resin in plasticizers represented in Fig. 1 was tested, these resins hardly dissolved in plasticizers having phthalate and sebacate structures such as DEHP. In the case of the polyvinyl butyral resin, when the proportion of polyvinyl alcohol units was set at 20% or more (a hydroxyl value of 92 or more), the resin became even less soluble in the plasticizers. In the case of the polyvinyl acetal resin, when the proportion of polyvinyl alcohol units was set at 17% or more (a hydroxyl value of 91 or more), the resin became even less soluble in the plasticizers. From the foregoing, when the polyvinyl butyral resin or polyvinyl acetal resin is used, one having a hydroxyl value of 90 to 300 is used.

Here, the hydroxyl value refers to an mg-number of potassium hydrate that is required to change acetic acid to potassium acetate, in which the acetic acid is produced by acetylating hydroxyl groups included in 1 gram of a resin sample with acetic acid anhydride.

On the other hand, the polyvinyl butyral resin in which the proportion of polyvinyl alcohol units is 50% or more (a hydroxyl value of 302 or more) is less soluble in an ink solvent such as MEK and ethanol. Even after trying to make the resin dissolve in the solvent by stirring it at normal temperature, traces of the resin remain undissolved. The same phenomenon occurs in the case of the polyvinyl acetal resin in which the proportion of polyvinyl alcohol units is 45% or more (a hydroxyl value of 306 or more). From the foregoing, when the polyvinyl butyral resin or polyvinyl acetal resin is used, one having a hydroxyl value of 90 to 300 is used.

When a comparison is made between the polyvinyl butyral resin and polyvinyl acetal resin in the range of preferable hydroxyl values, the polyvinyl butyral resin having a hydrophobic butyl group has an advantage; with its high compatibility with a resin material on which dots are made with ink, it can make a print with high ink film adhesion.

The polyvinyl acetal resin has an acetal unit which is small unlike a sterically-bulky butyral unit and which is formed between two hydroxyl groups. Thus, a shorter distance between chains in the resin can make denser print dots. Denser print dots provide an advantage in which highly abrasion-resistant prints are made.

Meanwhile, when a comparison is made between a resin including hydroxyl groups (of the present invention) and a resin including carboxyl groups (not of the present invention), a resin including carboxyl groups can easily be synthesized by copolymerizing two types of monomers. A resin including hydroxyl groups is synthesized through hydrolysis and cross-linking reaction after polymerization. Hence, a resin including carboxyl groups is more advantageous in terms of simple synthesis. On the other hand, for a resin including hydroxyl groups, the proportion of hydroxyl groups can be controlled by changing the degree of hydrolysis of polyvinyl acetate and the proportion of butylaldehyde or acetaldehyde to be added. Thus, swelling with a plasticizer can be controlled depending on conditions when synthesizing the resin.

### (3) Conductive agent

In the case of an inkjet printer of an electrostatic charging control type, if resistance of an ink is too large, ink droplets do not fly straight and tend to bend. Therefore, the resistance should be approximately 2000 Ωcm or less. The ink is composed of an organic solvent whose major component is MEK or ethanol, a resin and a pigment. Because the conductivity of these constituent substances is low, if the ink is composed entirely of these substances, its resistance will be large on the order of 5000 to several tens of thousands Ωcm and makes it difficult to perform desired printing by the inkjet printer of the electrostatic charging control type.

Therefore, it is required to add a conductive agent. The conductive agent is required to dissolve in a solvent used and it is also important to have no effect on color tone. In particular, concerning a white ink, a color tone of the white ink turns to the one that is not exactly white when a colored conductive agent is added to the white ink. Thus, the conductive agent is required to be transparent or white, when dissolved in the solvent. Besides, the conductive agent having a salt structure is frequently used. This is because such structure has an electric charge bias within molecules, which is apt to provide a high conductivity.

From the foregoing, it is preferable that the conductive agent has the salt structure in which a positive ion has a tetra alkyl ammonium ion structure. Its alkyl chain may be either straight or branched. As its carbon number is larger, dissolubility in a solvent will increase. As its carbon number is smaller, resistance can be decreased at a low additive rate. The carbon number that the conductive agent has when used in the ink preferably falls in a range of about 2 to 8.

Negative ions such as a hexafluoro phosphate ion and a tetrafluoroborate ion are preferable in terms of a high dissolubility in the solvent. Other negative ions are as follows: ions of chlorine, bromine and iodine. But these ions are not preferable because they tend to corrode a metal such as an iron and a stainless steel when they come in contact with the metal.

From the foregoing, preferable ones of the conductive agents are as follows: tetra ethyl ammonium hexafluoro phosphate, tetra propyl ammonium hexafluoro phosphate, tetra butyl ammonium hexafluoro phosphate, tetra pentyl ammonium hexafluoro phosphate, tetra hexyl ammonium hexafluoro phosphate, tetra octyl ammonium hexafluoro phosphate, tetra ethyl ammonium tetrafluoroborate, tetra propyl ammonium tetrafluoroborate, tetra butyl ammonium tetrafluoroborate, tetra pentyl ammonium tetrafluoro borate, tetra hexyl ammonium tetrafluoroborate, tetra octyl ammonium tetrafluoroborate, etc.

### (4) Leveling agent

After the ink lands on a material surface, ink dots are formed by solvent volatilization. At this time, an inward part of the dot tends to lower, as a rim of the dot bulges. This is due to the following reason. During a period until the solvent has volatilized after the ink landing on, the solvent volatilization in the rim portion of the dot takes place at an increased rate and the rim bulges as a result. When this phenomenon appears significantly, for example, if a print has been applied onto a black electric cable, the inward part of the dot may look gray not white. This is because the inward part of the dot becomes thin and black of the underlying electric cable can be seen through the ink film.

For the purpose of preventing this, addition of a poly dimethyl siloxane derivative having alkoxy groups at terminals to the ink prevented the rim of the dot from bulging and made the inward part of the dot look white.

In an embodiment of the present invention, as the leveling agent, a compound having poly alkoxy groups at both terminals of a dimethyl siloxane chain was used. A general formula of this compound is expressed by the following chemical formulas (9) and (10).

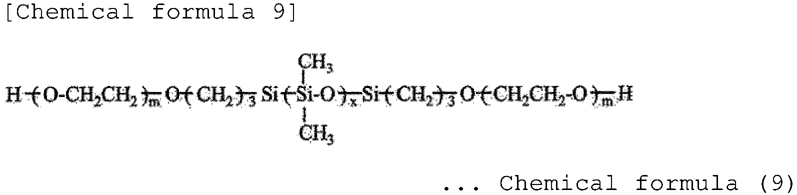

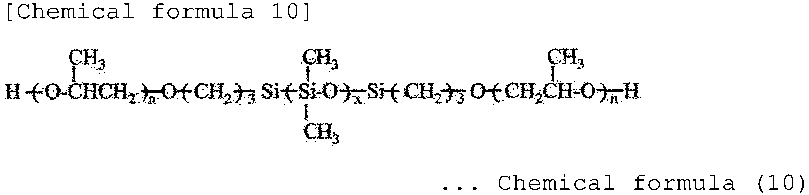

The compound which is expressed by the above chemical formula (9) is a compound having poly ethoxy groups at both terminals. The compound which is expressed by the above chemical formula (10) is a compound having poly propoxy groups at both terminals. In these formulas, x denotes the number of duplication of a dimethyl siloxane unit, m denotes the number of duplication of an ethoxy unit, and n denotes the number of duplication of an isopropoxy unit. By using a substance having this structure, a high leveling performance is provided with a small additive amount. In this structure, the dimethyl siloxane chain provides the leveling performance. Besides, poly alkoxy groups improve compatibility with the ink.

The leveling agents which are respectively expressed by the above chemical formulas (9) and (10) are required to dissolve in MEK which is a solvent. The leveling agents are also required to have a hydrophobic property to an extent enough to avoid a trouble such that a print swells by absorbing moisture in air and falls off. From a result of our examination, it is desirable that x falls in a range of 20 to 60 and m falls in a range of 10 to 40 in the above chemical formula (9) and it is desirable that x falls in a range of 20 to 60 and n falls in a range of 20 to 60 in the above chemical formula (10).

An effect of a leveling agent is described using the relevant drawings.

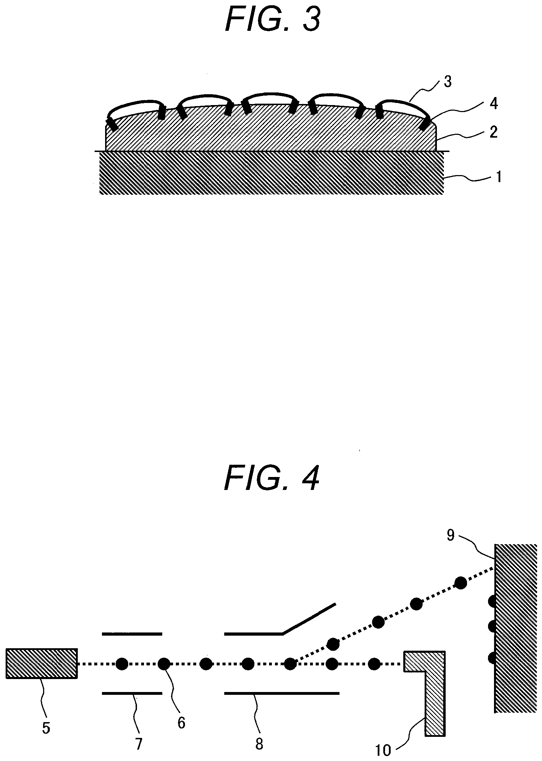

Fig. 2 is a case in which a leveling agent with alkoxy groups at one terminal was used and Fig. 3 is a case in which a leveling agent with alkoxy groups at both terminals was used.

After the ink is applied onto a material 1 to be printed on, the solvent volatilizes to form a dot 2. At this time, the leveling agent is locally present at and near the surface of the dot 2. A dimethyl siloxane chain 3 in the leveling agent, which has low compatibility with a resin or the like used in the ink, is present at and near the surface of the dot 2. Poly-alkoxy groups in the leveling agent, which have high compatibility with the resin or the like used in the ink, penetrate the internal body of the dot 2.

At this time, in the case of the leveling agent with poly alkoxy 4 groups at one terminal, as depicted in Fig. 2, the dimethyl siloxane chain 3 is present at the other end in a form in which it floats over the surface of the dot 2, not penetrating the internal body of the dot 2. That is, the dimethyl siloxane chain 3 cannot cover the surface of the dot 2 effectively. On the other hand, in the case of the leveling agent with poly alkoxy 4 groups at both terminals, as depicted in Fig. 3, the entire dimethyl siloxane chain 3 covers the surface of the dot 2 and, thus, this leveling agent can provide the high leveling performance with a small additive amount.

Because the dimethyl siloxane chain has a structure in which its dissolubility in MEK is low, when the proportion of its addition to the ink becomes large, precipitation of the pigment and resin or the like is liable to occur and there is a problem in which this precipitation causes ink nozzle clogging. In particular, given that the ink is applied in cold areas where the ink may be stored at -20°C or less in winter, the above precipitation is more liable to occur. Hence, it is desired to make the proportion of the addition of the leveling agent as low as possible. In this respect, the compound having the alkoxy groups at both terminals of the dimethyl siloxane chain is preferable, because it provides high leveling performance with a small additive proportion.

It is preferable that the additive rate of the leveling agent is a mass percentage ranging from 0.02% to 2% to the ink. If the additive rate is less than a mass percentage of 0.02%, the additive rate is so small that no effect of the addition of the leveling agent is observed. On the other hand, if the bot rate exceeds a mass percentage of 2%, the precipitation is observed at the bottom of a container containing ink when the ink has been left for about one day even at normal temperature of around 20°C. This is due to the following reason. Because the specific gravity of the leveling agent is smaller than that of MEK, it is presumed that the leveling agent precipitates at the bottom after the agent is segregated.

As the number of the duplication (x) of the dimethyl siloxane chain becomes larger, the leveling agent becomes less soluble in MEK. As the number of the duplication (m or n) of the poly alkoxy groups at both terminals becomes larger, the dissolubility of the leveling agent in MEK increases. As the ratio of m or n to x becomes larger, the leveling performance tends to decrease. Rather than m or n of poly alkoxy groups, more specifically, the number of carbon atoms in the poly alkoxy groups reflects the effect in the dissolubility and the leveling performance of the leveling agent.

Particularly, when the number of silicon atoms in the dimethyl siloxane chain is denoted by A and the number of carbon atoms in the poly alkoxy groups is denoted by B, if B falls in a range of 0.5A ≤ B ≤ 9A, it is possible to satisfy both of ensuring the stable dissolubility of the leveling agent in MEK for a prolonged period of time at normal temperature (20°C) and the leveling performance.

### 2. Inkjet printer

Printing with an inkjet printer supplied with the ink described in the foregoing context can provide desired prints. Fig. 4 depicts a process in which an inkjet printer of an electrostatic charging control type discharges the ink and the ink lands on a material surface.

Ink droplets 6 discharged from a nozzle 5 are charged by a charging electrode 7. After that, the direction of the ink droplets 6 is controlled by a deflecting electrode 8 and the ink droplets 5 land on the surface of a material 9 to be printed on. The ink which is not applied to the surface falls in a gutter 10 through which it is returned to an ink tank (omitted from depiction in Fig. 4). Here, the material to be printed on may be, but not limited to, an electric cable sheathed with a resin, a tire made of a rubber (including a synthetic rubber), or a bottle made of polyethylene terephthalate (PET) etc.

Because traces of moisture in air come to be mixed in the ink returned to the ink tank through this process, there is a possibility of precipitation of a leveling agent, pigment, or the like having low compatibility with water. But such precipitation is prevented because a resin including hydroxyl groups is mixed in the ink.

By providing a mechanism of measuring a viscosity of the solvent to be replenished as well as the ink, feedback can be performed so that printing can be carried out without trouble, even if another solvent or a mixture of a plurality of solvents are used. The viscosity of the ink is controlled to fall in a range of approximately 2 to 10 mPa·s. If the ink viscosity is higher than this range, the ink may become hard to discharge from the head. If the ink viscosity is lower than this range, a liquid leakage or the like from the head may occur.

This inkjet printer can jet the ink at a distance of several tens of millimeters from the surface of the material to be printed on. And thus it can carry out printing, even if the print head is apart from the material to be printed on. By utilizing this feature, the printer can apply a print to a convex or concave surface or to the material having a large curvature such as electric cables or tires. Here, the "material to be printed on" that has been printed is referred to as a "printed material". That is, the "printed material" is the one in which a print was applied to the surface of the material to be printed on. The material to be printed on may be made of a resin or a rubber.

In the case of electric cables, resins that may be a raw material of the material to be printed on include polyvinyl chloride, polyethylene, etc. If the material to be printed on is a rubber product such as tires, types of rubber that may be the raw material include isoprene rubber, butadiene rubber, chloroprene rubber, nitrile rubber, silicone rubber, etc. Any of these resins or types of rubber may be solely used or may be mixed with a plasticizer to produce the material to be printed on.

Examples of embodiment of the present invention are set forth below.

### Example 1 (Reference)

770 g of 2-butanone; as a resin, 100 g of a styrene acrylate resin with an average molecular weight of 4,900 and an acid value of 215 (Joncryl 680 supplied by BASF Corporation); as a pigment, 100 g of titanium oxide particles with an average particle size (median) of 0.2 µm; as a dispersant, 10 g of tetra ethylene glycol monobutyl ether; as a conductive agent, 10 g of tetra butyl ammonium tetraphenyl borate; and, as a leveling agent, 10 g of a compound having poly ethoxy groups at both terminals of a dimethyl siloxane chain (a compound which is expressed by the above chemical formula (9), where x is 29 and m is 22) were put in a container provided with stirring blades and stirred until the titanium oxide particles were dispersed and a white ink was prepared.

This ink was supplied to an inkjet printer (manufactured by Hitachi Industrial Equipment Systems Co., Ltd.). With the inkjet printer, a manufacturing number was printed onto a 100 mm-long cut piece of a black sheathed electric cable (IV 100SQ manufactured by Hitachi Cable Ltd., in which its sheathing material is composed of polyvinyl chloride and di-2-ethyl hexyl phthalate at a mass ratio of 7:3). Adjustment was made so that the diameters of print dots ranged from 300 to 400 µm.

Then, a transfer test is described.

Particularly, the above cut piece of the electric cable and another 100 mm-long cut piece of the same electric cable were tied together so that the sheathing material of the latter cable was brought in contact with the portion of a print applied onto the electric cable and left for seven days at 20°C. Seven days after, when the electric cable not printed was removed, it was visually verified that the print remained in the same state as was immediately after it was printed. No transfer of the print to a portion of the electric cable which was not printed was observed, the portion of the electric cable having been in contact with the print portion.

### Example 2 (Reference)

A white ink was prepared in the same way as in Example 1 except that 100 g of a styrene acrylate resin with an average molecular weight of 4,600 and an acid value of 108 (Joncryl 586 supplied by BASF Corporation) was used as a resin, instead of using 100 g of a styrene acrylate resin with an average molecular weight of 4,900 and an acid value of 215. Using this ink, a print was applied onto a sheathed electric cable through the use of the same material and printer as in Example 1. After that, the same transfer test as in Example 1 was performed. No print transfer was observed.

### Example 3

A white ink was prepared in the same way as in Example 1 except that 100 g of a polyvinyl butyral resin with an average molecular weight of 32,000 and a hydroxyl value of 97 (S-LEC BL-5 supplied by Sekisui Chemical Co., Ltd.) was used as a resin, instead of using 100 g of a styrene acrylate resin with an average molecular weight of 4,900 and an acid value of 215. Using this ink, a print was applied to a sheathed electric cable through the use of the same material and printer as in Example 1. After that, the same transfer test as in Example 1 was performed. No print transfer was observed.

### Example 4

A white ink was prepared in the same way as in Example 1 except that 100 g of a polyvinyl acetal resin with an average molecular weight of 17,000 and a hydroxyl value of 146 (S-LEC KS-10 supplied by Sekisui Chemical Co., Ltd.) was used as a resin, instead of using 100 g of a styrene acrylate resin with an average molecular weight of 4,900 and an acid value of 215. Using this ink, a print was applied to a sheathed electric cable through the use of the same material and printer as in Example 1. After that, the same transfer test as in Example 1 was performed. No print transfer was observed.

### (Comparative example 1)

A white ink was prepared in the same way as in Example 1 except that 100 g of a polymethyl methacrylate resin with an average molecular weight of 25,000 and an acid value of 0 was used as a resin, instead of using 100 g of a styrene acrylate resin with an average molecular weight of 4,900 and an acid value of 215. The polymethyl methacrylate resin was obtained by polymerizing methyl methacrylate. Using this ink, a print was applied to a sheathed electric cable through the use of the same material and printer as in Example 1. After that, the same transfer test as in Example 1 was performed. The print portion became faded and a part of it almost disappeared. A part of the print was transferred to a portion of the electric cable not printed, which had been in contact with the print portion. Hence, it was found that ink transfer takes place when the polymethyl methacrylate resin with an acid value of 0 was used.

### (Comparative example 2)

A white ink was prepared in the same way as in Example 1 except that 100 g of a copolymer of polystyrene and polymethyl methacrylate with an average molecular weight of 25,000 and an acid value of 0 was used as a resin, instead of using 100 g of a styrene acrylate resin with an average molecular weight of 4,900 and an acid value of 215. The copolymer of the polystyrene and the polymethyl methacrylate was obtained by copolymerizing styrene and methyl methacrylate. Using this ink, a print was applied to a sheathed electric cable through the use of the same material and printer as in Example 1. After that, the same transfer test as in Example 1 was performed. The print portion became faded and a part of it almost disappeared. A part of the print was transferred to a portion of the electric cable not printed, which had been in contact with the print portion. Hence, it was found that ink transfer takes place when a polymethyl methacrylate resin with an acid value of 0 was used.

### Example 5

In Examples 1 to 4, the condition for leaving the electric cables tied together in the transfer test was modified to leaving them for seven days at 60°C instead of leaving them for seven days at 20°C. For the samples of sheathed electric cables made experimentally in Examples 2 and 3, an ink transfer to a small extent was seen. But, for the samples of sheathed electric cables made experimentally in Examples 1 and 4, no ink transfer was seen.

When a comparison is made between Example 1 and Example 2 (both reference examples), the resin used in Example 1 has a high acid value of 215, whereas the resin used in Example 2 has a low acid value of 108. Hence, this showed that a resin having a higher acid value on the order of 200 should be used so that ink transfer can be prevented.

When a comparison is made between Example 3 and Example 4, the resin used in Example 4 has a high hydroxyl value of 146, whereas the resin used in Example 3 has a low hydroxyl value of 97. Hence, this showed that a resin having a higher hydroxyl value at or more than 100 should be used so that ink transfer can be prevented.

### List of Reference Signs:

1: Material to be printed on, 2: Dot, 3: Dimethyl siloxane chain, 4: Poly-alkoxy group, 5: Nozzle, 6: Ink droplet, 7: Charging electrode, 8: Deflecting electrode, 9: Material to be printed on, 10: Gutter

## Claims

1. An ink for an inkjet printer of an electrostatic charging control type, the ink being for printing on a material that includes a phthalate or an adipate, the ink comprising:
a resin;
a pigment;
a conductive agent; and
a solvent,
wherein the resin includes a hydroxyl group,
and wherein a hydroxyl value of the resin included in the ink is in a range of 90 to 300 and the resin is a polyvinyl butyral resin or a polyvinyl acetal resin.

2. The ink for the inkjet printer according to claim 1,
wherein the pigment is a titanium oxide.

3. The ink for the inkjet printer according to claim 1,
wherein the conductive agent has a salt structure and includes a tetra alkyl ammonium ion or a hexafluoro phosphate ion.

4. The ink for the inkjet printer according to claim 1, further comprising an additive,
wherein the additive is a poly dimethyl siloxane having poly alkoxy groups at both terminals thereof.

5. A printed material comprising:
a material to be printed on; and
a print applied to a surface of the material to be printed on,
wherein the print contains a resin, a pigment and a conductive agent, and the resin includes a hydroxyl group, and the material to be printed on is a resin or a rubber and contains a phthalate or an adipate as a plasticizer,
and wherein a hydroxyl value of the resin included in the ink is in a range of 90 to 300 and the resin is a polyvinyl butyral resin or a polyvinyl acetal resin.

6. The printed material according to claim 5,
wherein the pigment is a titanium oxide.

7. The printed material according to claim 5,
wherein the print further includes an additive, and the additive is a poly dimethyl siloxane having poly alkoxy groups at both terminals thereof.

## Patentansprüche

1. Tinte für einen Tintenstrahldrucker vom Typ elektrostatischer Ladesteuerung, wobei die Tinte zum Drucken auf ein Material, das Phthalat oder Adipat umfasst, vorgesehen ist, wobei die Tinte Folgendes umfasst:
ein Harz;
ein Pigment;
ein leitfähiges Mittel; und
ein Lösungsmittel,
wobei das Harz eine Hydroxylgruppe umfasst und
wobei die Hydroxylzahl des in der Tinte umfassten Harzes in einem Bereich von 90 bis 300 liegt und das Harz ein Polyvinylbutyral-Harz oder ein Polyvinylacetal-Harz ist.

2. Tinte für den Tintenstrahldrucker nach Anspruch 1, wobei das Pigment ein Titanoxid ist.

3. Tinte für den Tintenstrahldrucker nach Anspruch 1, wobei das leitfähige Mittel eine Salzstruktur aufweist und ein Tetraalkylammonium-Ion oder ein Hexafluorophosphat-Ion umfasst.

4. Tinte für den Tintenstrahldrucker nach Anspruch 1, die außerdem ein Additiv umfasst, wobei das Additiv ein Polydimethylsiloxan mit Polyalkoxygruppen an seinen beiden Enden ist.

5. Druckerzeugnis, das Folgendes umfasst:
ein zu bedruckendes Material; und
einen Druck, der auf eine Oberfläche des zu bedruckenden Materials aufgetragen ist, wobei der Druck ein Harz, ein Pigment und ein leitfähiges Mittel umfasst, das Harz Hydroxylgruppen umfasst, und das zu bedruckende Material ein Harz oder Kautschuk ist und ein Phthalat oder ein Adipat als Weichmacher enthält,
wobei die Hydroxylzahl des in der Tinte umfassten Harzes in einem Bereich von 90 bis 300 liegt und das Harz ein Polyvinylbutyral-Harz oder ein Polyvinylacetal-Harz ist.

6. Druckerzeugnis nach Anspruch 5, wobei das Pigment ein Titanoxid ist.

7. Druckerzeugnis nach Anspruch 5, wobei der Druck außerdem ein Additiv umfasst und das Additiv ein Polydimethylsiloxan mit Polyalkoxygruppen an seinen beiden Enden ist.

## Revendications

1. Encre pour une imprimante à jet d'encre du type à commande de charge électrostatique, l'encre étant destinée à une impression sur un matériau qui comprend un phtalate ou un adipate, l'encre comprenant :
une résine ;
un pigment ;
un agent conducteur ; et
un solvant,
dans laquelle la résine comprend un groupe hydroxyle,
et dans laquelle un indice d'hydroxyle de la résine incluse dans l'encre est dans une plage de 90 à 300 et la résine est une résine de polyvinylbutyral ou une résine de polyvinylacétal.

2. Encre pour imprimante à jet d'encre selon la revendication 1,
dans laquelle le pigment est un oxyde de titane.

3. Encre pour imprimante à jet d'encre selon la revendication 1,
dans laquelle l'agent conducteur a une structure de sel et comprend un ion tétraalkylammonium ou un ion hexafluorophosphate.

4. Encre pour imprimante à jet d'encre selon la revendication 1, comprenant en outre un additif,
dans laquelle l'additif est un polydiméthylsiloxane ayant des groupes polyalcoxy à ses deux extrémités.

5. Matériau imprimé comprenant :
un matériau à imprimer ; et
une impression appliquée sur une surface du matériau à imprimer,
dans lequel l'impression contient une résine, un pigment et un agent conducteur, et la résine comprend un groupe hydroxyle, et le matériau à imprimer est une résine ou un caoutchouc et contient un phtalate ou un adipate en tant que plastifiant,
et dans lequel un indice d'hydroxyle de la résine incluse dans l'encre est dans une plage de 90 à 300 et la résine est une résine de polyvinylbutyral ou une résine de polyvinylacétal.

6. Matériau imprimé selon la revendication 5,
dans lequel le pigment est un oxyde de titane.

7. Matériau imprimé selon la revendication 5,
dans lequel l'impression comprend en outre un additif, et l'additif est un polydiméthylsiloxane ayant des groupes polyalcoxy à ses deux extrémités.
